# EUROPEAN PATENT SPECIFICATION

(11) **EP 3 417 601 B1**
(45) Date of publication and mention of the grant of the patent: **27.10.2021**
(21) Application number: 17762517.5
(22) Date of filing: 07.03.2017
(51) Int. Cl.: H04L 29/08, H04L 12/721, H04L 12/715

(54) **HANDLING SOURCE ROUTED CONTENT**
HANDHABUNG VON GEROUTETEM QUELLENINHALT
GESTION DE CONTENU ACHEMINÉ PAR UNE SOURCE

(30) Priority: 10.03.2016 US 201615066636
(43) Date of publication of application: 26.12.2018
(73) Proprietor: Huawei Technologies Co., Ltd., Longgang District Shenzhen, Guangdong 518129 (CN)
(72) Inventor: ROCH, Evelyne, Gatineau Québec J8Y 3M2 (CA); AKHAVAIN MOHAMMADI, Mehdi, Arashmid, Ottawa Ontario K2H 8B3 (CA)
(74) Representative: Pfenning, Meinig & Partner mbB
(86) International application number: PCT/CN2017/075879
(87) International publication number: WO 2017/152831

(56) References cited:
- EP-A1- 2 869 535
- WO-A2-2004/095753
- WO-A2-2015/023537
- CN-A- 1 681 261
- CN-A- 101 455 020
- CN-A- 103 634 878
- US-A1- 2012 317 307
- US-A1- 2015 026 229
- HALEPLIDIS UNIVERSITY OF PATRAS O C CHERKAOUI UNIVERSITY OF QUEBEC IN MONTREAL S H HARES HUAWEI W M W WANG ZHEJIANG GONGSHANG UNIV: "Forwarding and Control Element Separation (ForCES) OpenFlow Model Library; draft-haleplidis-forces-openflow-lib-03.tx t", FORWARDING AND CONTROL ELEMENT SEPARATION (FORCES) OPENFLOW MODEL LIBRARY; DRAFT-HALEPLIDIS-FORCES-OPENFLOW-LIB-03.TX T, INTERNET ENGINEERING TASK FORCE, IETF; STANDARDWORKINGDRAFT, INTERNET SOCIETY (ISOC) 4, RUE DES FALAISES CH- 1205 GENEVA, SWITZERL, 25 April 2013 (2013-04-25), pages 1-96, XP015091325, [retrieved on 2013-04-25]

## Description

### FIELD

The present application relates to techniques for handling source-routed content in communication networks.

### BACKGROUND

Nodes in a computer network exchange formatted data units referred to as packets. Packets may carry a content payload. In a controlled network (or subnet), central routing of traffic can be employed. A source node is a node that is either the source of the data to be transmitted or an ingress node in a controlled network segment through which the data packets enter.

Source routing is a routing method where at least a portion of the route that a packet takes through the network is controlled by the source node. Typically, the source node embeds the route as control information in a header of the packet. This may be done by including a list of network addresses constituting the path in the packet header. The source node then forwards the packet along a first hop of the route. When a node (other than a destination node) receives a packet, the node determines the next hop of the route by examining the control information, and then forwards the packet along the next hop. Alternatively, in place of a list of network addresses, the source route can include a node-by-node list of egress ports. A node in the route will receive the packet, examine the associated source route and determine based on the source routing instructions which output port to forward the packet through.

It is possible for a node that receives a packet to act as a cache by locally storing the content in the packet's content payload. Content distribution networks are an example of networks where nodes may act as caches. In a source-routed network, packets received by a caching node are typically both stored by the caching node and forwarded along the route towards the packet's destination(s). The nodes that ace as caching nodes are typically determine *a priori* and the designated nodes are configured to cache content in advance through the use of an out-of-band control message (*e.g*., a message sent through a control plane). The configuration of the node may be static or dynamic and may be specific to particular content flows. Subsequently, by serving content from the cache, a node may avoid having to request the content from another node, for example from a node where the content originated. Hash routing in a software defined networking is subject of WO 2015/023537 A2. US 2012 / 0317307 A1 concerns content identifier based cache flooding with a radius constraint. Document EP2869535A1 discloses a packet-forwarding device that operates in an information-centric network (ICN), and facilitates executing instructions included in a packet to manipulate one or more local resources.

### SUMMARY

In one aspect, there is provided a method according to claim 1 at a receiving node. The method involves receiving a data transmission including control information and a content payload, performing an action in response to determining that the control information includes an instruction to execute the action, and forwarding the content payload in accordance with the control information.

The instruction includes an indication for the receiving node to cache the content payload. Performing the action includes caching the content payload in a cache at the receiving node, wherein the control information further comprises a command specified in a command field and metadata in a metadata field, the metadata specifying at least one of parameters for the command or data required to perform the command; and performing the action comprises performing the command as specified by the metadata; wherein the command comprises an instruction to communicate to another node whether a content item is cached at the receiving node, and the metadata identifies the another node and the content item.

Optionally, performing the action also includes determining a label for the content payload from the control information. Caching the content payload includes caching the content payload for retrieval by the label.

Optionally, the control information also includes a field specifying a caching expiry time. The method also includes removing the content payload from the cache after the caching expiry time.

Optionally, the control information also includes a command specified in a command field. Performing the action includes performing the command.

Optionally, the command includes an instruction to flush a cache at the receiving node.

Optionally, the command includes an instruction to transmit statistics gathered by the receiving node to another node.

Optionally, the control information also includes metadata in a metadata field. The metadata specifies at least one of parameters for the command or data required to perform the command. Performing an action dictated by the control information includes performing the command as specified by the metadata.

Optionally, the command includes an instruction to communicate to another node whether a content item is cached at the receiving node. The metadata identifies the another node and the content item.

Optionally, the command includes an instruction to replace a first content item cached at the receiving node with a second content item downloaded from a content location. The metadata identifies the first content item, the second content item, and the content location.

Optionally, the command includes an instruction to run a program local to the receiving node. The metadata identifies the program.

Optionally, the command includes an instruction to execute a script. The metadata encodes the script.

Optionally, determining that the control information includes an instruction to execute the action involves determining that the instruction is directed to the receiving node.

Optionally, the control information includes at least one Internet Protocol (IP) address.

Optionally, the control information includes at least one network segment identifier.

Optionally, the control information includes at least one outbound port.

In another aspect, there is provided a method according to claim 8 at a source node involving at least one of determining or receiving a route through nodes of a network beginning with the source node, and a specified subset of the nodes for performing an action. The method also involves transmitting a data transmission including a content payload, and control information including an instruction directed to the subset of the nodes to execute the action. The instruction includes an indication for nodes of the specified subset to cache the content payload and wherein the control information further comprises a command specified in a command field, metadata in a metadata field and an instruction to communicate to another node whether a content item is cached at the receiving node, the metadata specifying at least one of parameters for the command or data required to perform the command.

Optionally, the route includes a multicast tree.

Optionally, the control information also includes an encoding of the multicast tree.

In still another aspect, there is provided a network node according to claim 11 including an inbound network interface configured to receive a data transmission. The data transmission includes control information and a content payload. The network node also includes a processor configured to perform an action in response to determining that the control information includes an instruction to execute the action. The network node also includes an outbound network interface configured to forward the content payload in accordance with the control information. The instruction comprises an indication for the node to cache the content payload; and the processor is configured to cache the content payload in the cache and wherein the control information further comprises a command specified in a command field and metadata in a metadata field, the metadata specifying at least one of parameters for the command or data required to perform the command; and the processor is configured to perform the action by performing the command as specified by the metadata; and wherein the command comprises an instruction to communicate to another node whether a content item is cached at the receiving node, and the metadata identifies the another node and the content item.

Optionally, the processor is also configured to perform the action in response to determining that the instruction is directed to the network node.

In yet another aspect, there is provided a source network node according to claim 13 including an inbound network interface and a processor. The inbound network interface is configured to receive or the processor is configured to determine a route through nodes of a network beginning with the source network node, and a specified subset of the nodes for performing an action. The source network node also includes an outbound network interface configured to transmit a data transmission including a content payload and control information including an instruction directed to the subset of the nodes to execute the action. The instruction comprises an indication for the subset of the nodes to cache the content payload and wherein the control information further comprises a command specified in a command field, metadata in a metadata field and an instruction to communicate to another node whether a content item is cached at the receiving node, the metadata specifying at least one of parameters for the command or data required to perform the command.

### BRIEF DESCRIPTION OF THE DRAWINGS

Embodiments of the invention will be described in greater detail with reference to the accompanying drawings, in which:
FIG. 1 is a diagram of an example network and a multicast tree for distributing content to nodes in the network;
FIG. 2A shows an example encoding of the multicast tree of FIG. 1 for inclusion in a packet header;
FIG. 2B shows an example encoding of the multicast tree of FIG. 1 including flags for caching content;
FIG. 2C shows an example encoding of the multicast tree of FIG. 1 including fields for a flag, a command, and metadata;
FIG. 3 is a flow diagram of an example method performed by a node receiving a source-routed packet;
FIG. 4 is a flow diagram of an example method performed by a source network node determining or receiving a source route through a network;
FIG. 5A is a schematic illustration of an example network node configured to receive source-routed packets; and
FIG. 5B is a schematic illustration of an example network controller configured to determine a source route through a network.

### DETAILED DESCRIPTION

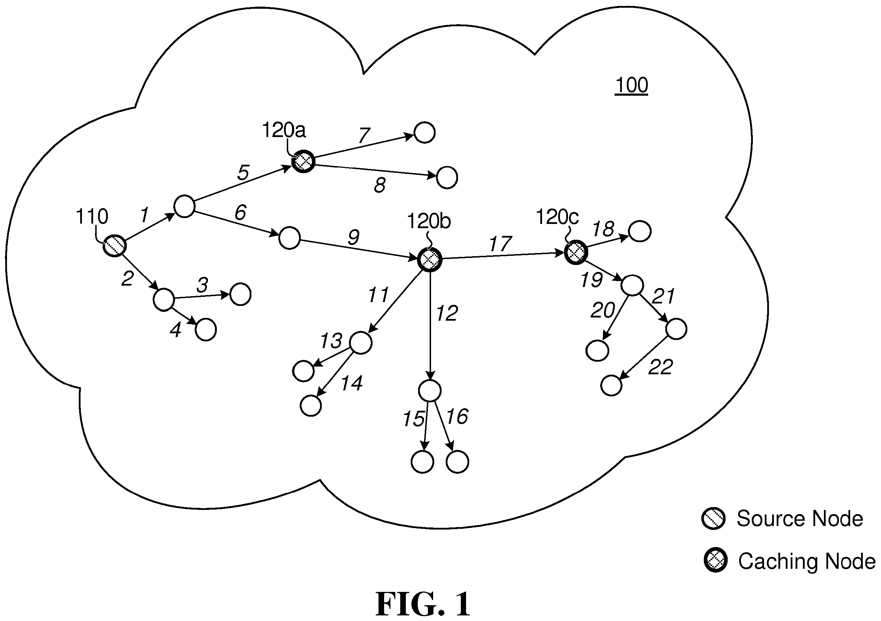

FIG. 1 is a diagram of a network 100. Network 100 consists of a number of nodes (including nodes 110, 120a, 120b, 120c, and other nodes, not numbered) interconnected by communication links 1 to 22 to form a multicast distribution tree. The illustrated communication links 1 to 22 form a multicast tree from a source node 110. The multicast tree permits packets originating from source node 110 to be distributed to all of the nodes in network 100. Each of the communication links 1 to 22 is illustrated with a directional arrow showing the direction of a "hop" along which packets are transmitted between nodes in order to distribute packets originating from source node 110. Some nodes in the illustrated multicast tree forward incoming packets along more than one outgoing link to different nodes. Nodes that forward incoming packets to more than one outgoing node are referred to as replication points (or, alternatively, as branch points).

It should be understood that the set of communication links shown in FIG. 1 is intended as an illustrative example of a multicast tree from a particular node acting as source node 110, and that other communication links (not shown) may also exist in the network 100. A different multicast tree would be employed for content from a different node acting as a source node. Also, depending on the topology of a network, there may be more than one possible multicast tree to distribute content from a source node 110 to a particular set of other nodes in the network. It should also be understood that other nodes (not shown) may exist in the network that will not be recipients of content distributed according to the illustrated multicast tree. More generally, embodiments described herein can be applied to any network of interconnected nodes.

The multicast tree from source node 110 is generated based on knowledge of the topology of network 100. In some embodiments, the multicast tree is generated by a central network controller (not shown) and then communicated to source node 110. In other embodiments, the multicast tree is generated by source node 110.

To transmit content generated at source node 110 to the nodes of network 100 using source routing, source node 110 creates a packet having a header and a payload. The payload of the packet contains at least a portion of the content. Source node 110 also encodes the multicast tree into control information associated with the packet. The control information is typically stored in the packet header. That is, the packet header will typically include routing information consisting of the sequence of hops the packet should follow to its destinations. It should be understood that in some cases the packet is to be forwarded to a single destination, and in other cases the packet is to be forwarded to multiple destinations. The encoded sequence includes at least one next hop to take for each node along the route to the packet's destinations. For replication points of the multicast tree, more than one next hop is included. Source node 110 transmits the packet along the first hops indicated in the packet header. Each subsequent node that receives the packet forwards the packet to the next hops indicated in the packet header. In some embodiments, before forwarding the packet to the next hops indicated in the packet header, the forwarding node deletes hops from the packet header which are no longer necessary, *i.e.,* hops along which the packet has already been forwarded.

Content transmitted by source node 110 may be cached at other nodes so that future requests for the content can be served from those other nodes. In some embodiments, during generation of the multicast tree, a set of nodes 120a, 120b, 120c are identified at which content is to be cached. By using multicast source routed packets to distribute content to nodes in a network for caching, the network utilization involved in distributing the content to the nodes where it is to be cached may in some cases be reduced in comparison to other methods of distributing content to network nodes for caching. For example, by using multicast source routed packets, network utilization may be reduced in comparison to transmitting the content for caching from source node 110 in a series of individual packets to each of the set of nodes 120a, 120b, 120c. This is because when the content from source node 110 is transmitted in a series of individual packets to nodes 120a, 120b, 120c, some of the individual packets might traverse some of the same network communication links, which may involve more network traffic.

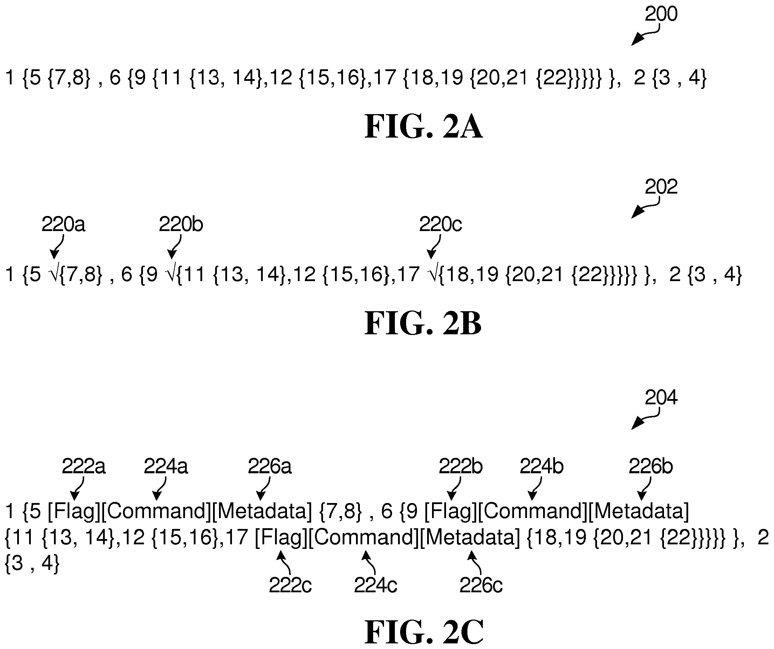

FIG. 2A shows an example encoding 200 of the multicast tree of FIG. 1 for inclusion in a packet header for a packet originating at source node 110. Each link along which the packet is to be forwarded is listed in the packet header. Replication points are comma delimited and brackets are used to indicate subsequent hops. For example, the element "5 {7,8}" in the encoding 200 indicates that after the packet is forwarded along communication link 5, the node receiving the packet should then forward the packet along communication links 7 and 8. It should be understood that the example encoding 200 shown in FIG. 2A is intended to be illustrative, and that other encodings of the multicast tree are possible. For example, although the example encoding 200 lists communication links by the link numbers illustrated in FIG. 1, in some example embodiments, Internet Protocol (IP) addresses, outbound ports, and/or network segment identifiers may be specified in the encoding 200 to identify outgoing routes along which the packet should be forwarded.

FIG. 2B shows a variation 202 of the encoding of the multicast tree shown in FIG. 2A in which action indicators 220a, 220b, 220c consisting of caching flags are included in the multicast tree to identify which nodes should cache the content. For example, the element "5 √{7,8}" in the encoding 210 contains the caching flag "√". The element "5 √{7,8}" indicates that after the packet is forwarded along communication link 5, the content in the content payload of the packet is to be cached prior to forwarding the packet along communication links 7 and 8. As a result, node 120a will receive the packet, cache it and forward it along links 7 and 8.

In addition to specifying the forwarding path, the header can now include a caching flag as shown in FIG 2B. A node receiving a packet is able to extract both caching instructions as well as forwarding instructions from the encoded source route. In some embodiments, a label for the content may also be included in the packet header. This label may also be stored in the cache so that the content can later be retrieved from the cache by label. In some embodiments, the label is a name identifying the content.

It should be understood that the illustrated caching flag "√" is intended merely as an illustrative symbol. Another symbol may be used as the action indicator representing a caching flag in the encoding. Various other ways of providing action indicators associated with particular nodes are possible. For example, in some embodiments, the action indicators in the encoding may consist of a list of nodes identified by network addresses that should cache a packet's content. More generally, anything that can identify which nodes should cache the packet's content can be used as action indicators in the encoding.

More generally, action indicators may be provided in packet headers to direct specific receiving nodes to perform a variety of actions, not just caching. For example, a particular flag may be included in a packet header to direct a receiving node to flush its cache. In another example, a particular flag may be included in a packet header to direct a receiving node to transmit statistics gathered by the receiving node to another predetermined node. In some embodiments, more than one type of action indicator, such as more than one type of flag, each indicating a different action to be performed by a receiving node, is potentially included in a packet header. In an embodiment, a bitfield is included to direct a receiving node to perform particular actions, where each bit in the bitfield corresponds to one particular action. For example, an 8-bit bitfield may be used to direct receiving nodes to perform any combination of 8 particular actions. A receiving node (to which the bitfield is directed) performs the particular actions for which corresponding bits in the bitfield are set to 1.

FIG. 2C shows another example encoding 204 of the multicast tree shown in FIG. 2A in which action indicators comprising command flags 222a, 222b, 222c are included in the encoded multicast tree. Also included in the encoded multicast tree are command fields 224a, 224b, 224c and metadata fields 226a, 226b, 226c. In the illustrated example, the command flags 222a, 222b, 222c, command fields 224a, 224b, 224c, and metadata fields 226a, 226b, 226c serve to direct certain nodes to perform particular actions. More specifically, in the example illustrated in FIG. 2C, the presence of a command flag 222a, 222b, 222c is used to indicate that respective command fields 224a, 224b, 224c and metadata fields 226a, 226b, 226c follow in the encoding. The command fields 224a, 224b, 224c specify a particular action to take, and the metadata fields 226a, 226b, 226c optionally specify parameters for the command and/or other information required to perform the command. Some specific examples of metadata that can be included in the metadata fields in some embodiments are provided further below. In some embodiments, the metadata fields 226a, 226b, 226c are omitted. In some embodiments, each command field is capable of specifying more than one particular action to take. For example, in some embodiments, each command field contains a list of one or more commands. In some embodiments, each command field contains a bitfield used to indicate particular actions to perform, like the bitfields described above with respect to FIG. 2B. In some embodiments, when the command fields contain bitfields used to indicate particular actions to perform, the command flags referred to above are omitted because the bitfield serves as an implicit indication that the node is to perform an action. In some embodiments, the command fields may include both commands and parameters for those commands. In some embodiments, the command fields may include a command and one or more related subcommands. More generally, it should be understood that the specific manner in which commands, parameters, and/or other information are represented by the command flags, the command fields, and/or the metadata fields are design choices. Some embodiments use a different number or combination of flags and/or fields in order to direct certain nodes to perform particular actions.

In some embodiments, command flags, command fields, and metadata fields can be included in the encoded multicast tree as illustrated in FIG. 2C. Each node that receives an incoming packet examines the packet header. A determination is made to determine whether the encoded multicast tree includes an action indicator consisting of a command flag directed to itself, *i.e.,* to the node receiving the incoming packet. In operation, a node receives a packet and inspects the packet header. In conventional implementations, a node receiving a packet used the header to identify the routing information. Using the enhanced packet header, the node can extract instructions to execute commands as directed. Upon identifying a command for execution, the node reads the command and metadata fields and performs the specified command based on any parameters and/or other relevant information included in the metadata field. The node can then forward the packet to any further destination communication links indicated in routing information provided in the packet header. Forwarding the packet and execution of a specified command can happen in any order, and may happen simultaneously or in an overlapping fashion. Those skilled in the art will also appreciate that metadata may in some embodiments include instructions related to the order in which operations should be performed.

The command and metadata fields can be used to instruct particular nodes in the distribution path to perform a variety of functions. In one embodiment, the command field contains a request to set the cache expiry time for the receiving node, and the metadata field specifies the cache expiry time. When cached items have remained in the node's cache for the specified cache expiry time, the node removes the cached items from the cache. In another embodiment, the command field contains a query about the availability of a content item in the node's cache. The metadata field can be used to provide a content identifier. Upon receipt of this instruction, the node determines if the identified content is cached and sends the result to a specified node (*e.g.,* the source node). In another embodiment, the command field contains an instruction to replace cached content with content specified in the metadata field. In another embodiment, the command field contains an instruction to run a local program at the receiving node, and the metadata field identifies the program to be executed. In another embodiment, the command field contains an instruction to execute a script provided in the metadata field.

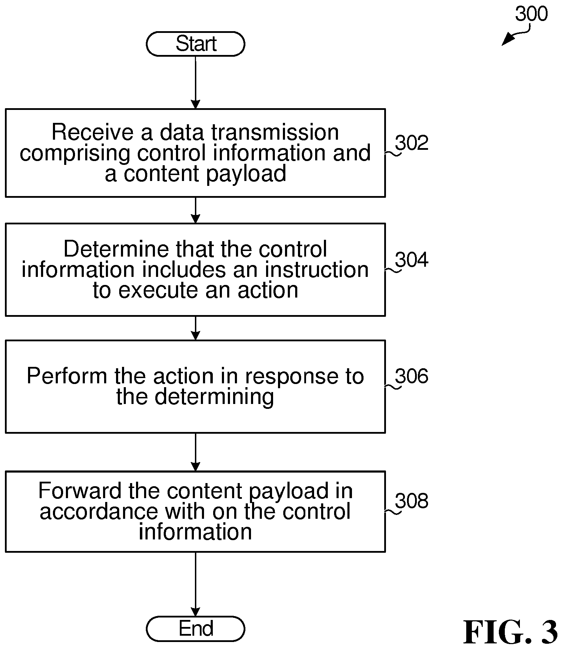

FIG. 3 is a flow chart illustrating a method 300 performed by a network node receiving a source-routed packet. At step 302, the node receives a data transmission, such as a packet. The packet has a header and a payload. The payload carries content and the header includes routing information used by the node to determine where the content should be forwarded. The header further includes an instruction to perform a particular action. This instruction is also referred to as control information. At step 304, the node determines whether the control information includes an instruction directed to the receiving node to execute an action. If so, at step 306 the node executes the action specified in the control information. At step 308, the node forwards the content payload based on the routing information in the control information. As noted above, steps 304 and 308 can be performed in parallel, in either order if performed serially, or in an order specified in the control information.

As explained above with respect to FIG. 2B, in some embodiments, step 304 involves determining whether the control information includes an instruction directed to the receiving node to execute an action. This involves determining whether the control information includes an indication for the receiving node to cache the content of the content payload. If so, the receiving node caches the content of the content payload in a cache.

Alternatively, as explained above with respect to FIG. 2C, in some embodiments, step 304 involves determining whether the control information includes a flag for the receiving node indicating that a command specified in a command field is also present. If so, the receiving node performs the command specified in the command field. If an optional metadata field is also present, the receiving node performs the command specified in the command field according to parameters specified in the metadata field.

In the embodiments described above in detail, it is assumed that the type of source routing being used is multicast routing. In another embodiment, unicast routing is employed. Unicast routing specifies a route from a single source node to a single destination node. In some embodiments, unicast routes are encoded in packet headers in the same way as the multicast routes described above with respect to FIGs. 2A to 2C. It should be noted that unicast routes do not need replication points. The use of instructions as described above for multicast routing can also be applied in the same manner, with instructions used to specify certain nodes along the unicast route that should cache the content to be cached and/or perform another action.

The route through the network used for source routing is determined by a network entity having knowledge of the network topology and sufficient processing resources to determine routes. In some embodiments, the network entity determining the route is a part of a network management system. In some embodiments, the network entity determining the route is a network controller, such as a Software Defined Network Controller. In some embodiments, the network entity determining the route is a node such as the source node.

In some embodiments, the network entity also determines a subset of nodes along the route for executing an action. For example, the network entity may determine a subset of nodes along the route that should cache a content item. In some embodiments, the steps of determining the route and determining the subset of nodes are performed in an opposite order to the order described above. That is, the network entity first determines a subset of nodes in the network that are to be used for caching the content item, and then subsequently determines a route through the network beginning with a source node, the route including at least the subset of nodes that are to be used for caching the content item. In some embodiments, different network entities may determine the route through the network and the subset of nodes along the route for executing the action.

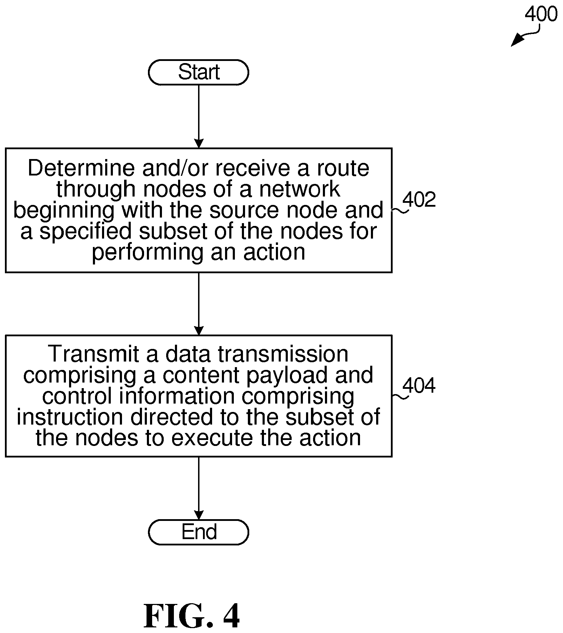

FIG. 4 is a flow diagram of a method 400 performed by a source network node. At step 402, the source node determines, or receives from another network entity, a route between the source node and the destination. In some embodiments, the route is as a multicast tree beginning at the source node. In other embodiments, the route is a unicast route. The source node also determines or receives a specified subset of the nodes along the route that are selected to perform an action. At step 404, the source node transmits a data transmission, such as a packet. The data transmission has associated control information. The control information may be stored in a packet header accompanying content stored in the packet payload. The control information includes routing information specifying a data transmission path as well as instructions directed to the subset of the nodes to execute the action. For example, the control information may include caching indicators designating the subset of nodes that are to cache the content. In embodiments where the determined route is a multicast tree, the routing information consists of an encoding of the multicast tree. In embodiments where the determined route is a unicast route, the routing information consists of an encoding of the unicast route.

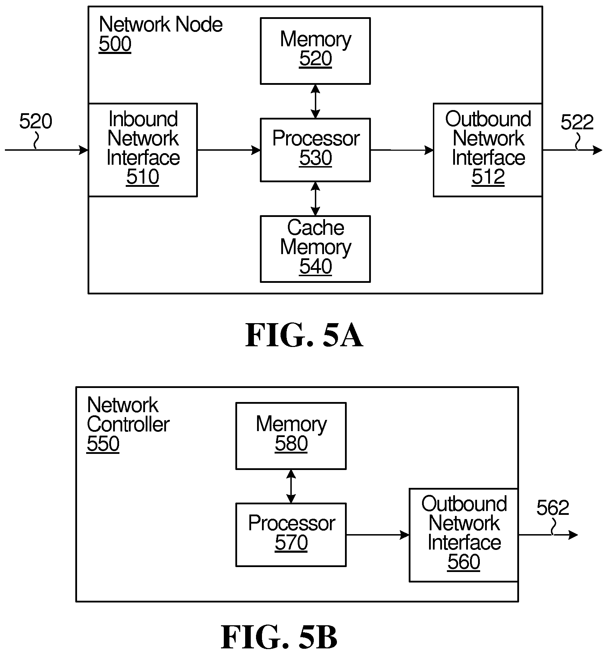

FIG. 5A is a schematic illustration of a network node 500 configured to receive source-routed packets, for example by performing the method 300 discussed above with respect to FIG. 3. The network node 500 has an inbound network interface 510 configured to receive a data transmission 520. The received data transmission may include control information and a content payload. The control information includes routing information. The network node 500 includes a processor 530 configured to determine whether the control information includes an instruction directed to the network node to execute an action and, if so, perform the action dictated by the control information. In some embodiments, processor 530 is a computer processor executing instructions stored on a computer-readable memory 520. In other embodiments, processor 530 consists of hardware logic. In the illustrated embodiment, the network node 500 also includes a cache memory 540. The instruction dictated by the control information may involve caching the content represented in the content payload in the cache memory 540. The network node 500 also has an outbound network interface 512 configured to forward the content payload based on the control information.

The network node 500 of FIG. 5A may also act as a source node for performing the method 400 discussed above with respect to FIG. 4. In some embodiments, inbound network interface 510 receives a route through nodes of a network beginning with network node 500 as well as a specified subset of the network nodes for performing an action. In other embodiments, processor 530 may determine the route and the specified subset of the network nodes based on information regarding the network topology stored in memory 520. Network node 500 then transmits a data transmission 522 via outbound network interface 512 comprising a content payload and control information comprising an instruction directed to the subset of the nodes to execute the action.

FIG. 5B is a schematic illustration of a network controller 550 configured to determine a source route through a network. The network controller 550 has a memory 580 storing connectivity information of nodes in a network. The network controller 550 also has a processor 570 configured to determine a subset of nodes in the network for caching a content item and to analyze the connectivity information to determine a route through the network beginning with a source node, where the route includes at least the subset of nodes for caching the content item. In some embodiments, processor 570 is a computer processor executing instructions stored on a computer-readable memory (not shown). In other embodiments, processor 570 consists of hardware logic. The network controller 550 also has an outbound network interface 560 configured to communicate with the source node by transmitting 562 an instruction to the source node to transmit a data transmission involving routing information for routing the data transmission along the determined route and a content payload containing the content item. The routing information includes indicators designating the subset of nodes for caching the content item.

In some embodiments, a non-transitory computer readable medium comprising instructions for execution by a processor may be provided to control the operation of processor 530 in FIG. 5A or processor 570 in FIG. 5B, and/or to otherwise control the execution of methods described above. In some embodiments, the processor being controlled may be a component of a general-purpose computer hardware platform. In other embodiments, the processor may be a component of a special-purpose hardware platform. For example, the processor may be an embedded processor, and the instructions may be provided as firmware. Some embodiments may be implemented by using hardware only. In some embodiments, the instructions for execution by a processor may be embodied in the form of a software product. The software product may be stored in a non-volatile or non-transitory storage medium, which can be, for example, a compact disc read-only memory (CD-ROM), universal serial bus (USB) flash disk, or a removable hard disk.

## Claims

1. A method at a receiving node, the method comprising:
receiving (302) a data transmission comprising control information and a content payload;
performing (306) an action in response to determining that the control information includes an instruction to execute the action; and
forwarding (308) the content payload in accordance with the control information
wherein the instruction comprises an indication for the receiving node to cache the content payload; and
performing (306) the action comprises caching the content payload in a cache at the receiving node;
wherein the control information further comprises a command specified in a command field and metadata in a metadata field, the metadata specifying at least one of parameters for the command or data required to perform the command; and
performing (306) the action comprises performing the command as specified by the metadata;
**characterized in that**
the command comprises an instruction to communicate to another node whether a content item is cached at the receiving node, and
the metadata identifies the another node and the content item.

2. The method of claim 1, wherein:
performing (306) the action further comprises determining a label for the content payload from the control information; and
caching the content payload comprises caching the content payload for retrieval by the label.

3. The method of any one of claims 1 and 2, wherein the control information further comprises a field specifying a caching expiry time, the method further comprising:
removing the content payload from the cache after the caching expiry time.

4. The method of any of claims 1 to 3, wherein:
the command comprises an instruction to replace a first content item cached at the receiving node with a second content item downloaded from a content location, and
the metadata identifies the first content item, the second content item, and the content location.

5. The method of any one of claims 1 to 4, wherein:
the command comprises an instruction to execute a script, and
the metadata encodes the script.

6. The method of any one of claims 1 to 5, wherein:
determining that the control information includes an instruction to execute the action comprises determining that the instruction is directed to the receiving node.

7. The method of any one of claims 1 to 6, wherein the control information comprises at least one or more: Internet Protocol, IP, address, network segment identifier, or outbound port.

8. A method at a source node comprising:
at least one of determining or receiving (402):
a route through nodes of a network beginning with the source node, and
a specified subset of the nodes for performing an action; and
transmitting a data transmission comprising:
a content payload, and
control information comprising an instruction directed to the subset of the nodes to execute the action
wherein the instruction comprises an indication for the receiving node to cache the content payload;
**characterized in that**
the control information further comprises a command specified in a command field, metadata in a metadata field and an instruction to communicate to another node whether a content item is cached at the receiving node, the metadata specifying at least one of parameters for the command or data required to perform the command.

9. The method of claim 8, wherein the route comprises a multicast tree.

10. The method of claim 9, wherein the control information further comprises an encoding of the multicast tree.

11. A network node (500) comprising:
an inbound network interface (510) configured to receive a data transmission, the data transmission comprising control information and a content payload;
a processor (530) configured to perform an action in response to determining that the control information includes an instruction to execute the action;
a cache (540); and
an outbound network interface (512) configured to forward the content payload in accordance with the control information
wherein the instruction comprises an indication for the node to cache the content payload; and
the processor (530) is configured to cache the content payload in the cache (540);
wherein the control information further comprises a command specified in a command field and metadata in a metadata field, the metadata specifying at least one of parameters for the command or data required to perform the command; and
the processor (530) is configured to perform the action by performing the command as specified by the metadata;
**characterized in that**
the command comprises an instruction to communicate to another node whether a content item is cached at the receiving node, and
the metadata identifies the another node and the content item.

12. The network node of claim 11, wherein:
the processor (530) is further configured to perform the action in response to determining that the instruction is directed to the network node (500).

13. An source network node comprising:
an inbound network interface;
a processor, wherein the inbound network interface is configured to receive or the processor is configured to determine: a route through nodes of a network beginning with the source network node, and a specified subset of the nodes for performing an action; and
an outbound network interface configured to transmit a data transmission comprising:
a content payload, and
control information comprising an instruction directed to the subset of the nodes to execute the action
wherein the instruction comprises an indication for the subset of the nodes to cache the content payload;
**characterized in that**
the control information further comprises a command specified in a command field, metadata in a metadata field and an instruction to communicate to another node whether a content item is cached at the receiving node, the metadata specifying at least one of parameters for the command or data required to perform the command.

## Patentansprüche

1. Verfahren bei einem Empfangsknoten, wobei das Verfahren Folgendes umfasst:
Empfangen (302) einer Datenübertragung, die Steuerinformationen und einen Nutzdateninhalt enthält;
Ausführen (306) einer Aktion in Reaktion auf das Bestimmen, dass die Steuerinformationen eine Anweisung zum Ausführen der Aktion enthalten; und
Weiterleiten (308) des Nutzdateninhalts in Übereinstimmung mit den Steuerinformationen, wobei die Anweisung eine Angabe für den Empfangsknoten, den Nutzdateninhalt im Cache zu speichern, umfasst; und
wobei das Ausführen (306) der Aktion das Cache-Speichern des Nutzdateninhalts in einem Cache in dem Empfangsknoten umfasst;
wobei die Steuerinformationen ferner einen Befehl, der in einem Befehlsfeld spezifiziert ist, und Metadaten in einem Metadatenfeld umfassen, wobei die Metadaten Parameter für den Befehl und/oder Daten, die zum Ausführen des Befehls erforderlich sind, spezifieren; und
wobei das Ausführen (306) der Aktion das Ausführen des Befehls wie durch die Metadaten spezifiziert umfasst;
**dadurch gekennzeichnet, dass**
der Befehl eine Anweisung zum Kommunizieren an einen weiteren Knoten, ob ein Inhaltselement in dem Empfangsknoten im Cache gespeichert ist, umfasst, und
die Metadaten den weiteren Knoten und das Inhaltselement identifizieren.

2. Verfahren nach Anspruch 1, wobei:
das Ausführen (306) der Aktion ferner das Bestimmen eines Kennzeichens für den Nutzdateninhalt aus den Steuerinformationen umfasst; und
das Cache-Speichern des Nutzdateninhalts das Cache-Speichern des Nutzdateninhalts zum Aufruf durch das Kennzeichen umfasst.

3. Verfahren nach einem der Ansprüche 1 und 2, wobei die Steuerinformationen ferner ein Feld, das eine Cache-Speicherungs-Verfallszeit spezifiziert, umfassen, wobei das Verfahren ferner Folgendes umfasst:
Entfernen des Nutzdateninhalts aus dem Cache nach der Cache-Speicherungs-Verfallszeit.

4. Verfahren nach einem der Ansprüche 1 bis 3, wobei:
der Befehl eine Anweisung zum Ersetzen eines ersten Inhaltselements, das in dem Empfangsknoten gespeichert ist, durch ein zweites Inhaltselement, das aus einem Inhaltsort heruntergeladen ist, umfasst, und
die Metadaten das erste Inhaltselement, das zweite Inhaltselement und den Inhaltsort identifizieren.

5. Verfahren nach einem der Ansprüche 1 bis 4, wobei:
der Befehl eine Anweisung zum Ausführen eines Skripts umfasst und
die Metadaten das Skript codieren.

6. Verfahren nach einem der Ansprüche 1 bis 5, wobei:
das Bestimmen, dass die Steuerinformationen eine Anweisung zum Ausführen der Aktion enthalten, das Bestimmen, dass die Anweisung für den Empfangsknoten bestimmt ist, umfasst.

7. Verfahren nach einem der Ansprüche 1 bis 6, wobei die Steuerinformationen wenigstens eines oder mehrere aus dem Folgenden umfassen: Internetprotokoll-Adresse, IP-Adresse, Netzsegmentbezeichner oder Ausgangsanschluss.

8. Verfahren in einem Ursprungsknoten, das Folgendes umfasst:
wenigstens eines aus Bestimmen oder Empfangen (402):
einer Route durch Knoten eines Netzes beginnend mit dem Ursprungsknoten, und
einer spezifizierten Teilmenge der Knoten zum Ausführen einer Aktion; und
Senden einer Datenübertragung, die Folgendes umfasst:
einen Nutzdateninhalt, und
Steuerinformationen, die eine Anweisung, die für die Teilmenge der Knoten bestimmt ist, zum Ausführen der Aktion umfassen,
wobei die Anweisung eine Angabe für den Empfangsknoten zum Cache-Speichern des Nutzdateninhalts umfasst;
**dadurch gekennzeichnet, dass**
die Steuerinformationen ferner einen Befehl, der in einem Befehlsfeld spezifiziert ist, Metadaten in einem Metadatenfeld und eine Anweisung zu einem weiteren Knoten zu kommunizieren, ob ein Inhaltselement in dem Empfangsknoten im Cache gespeichert ist, umfassen, wobei die Metadaten Parameter für den Befehl und/oder Daten, die zum Ausführen des Befehls erforderlich sind, spezifizieren.

9. Verfahren nach Anspruch 8, wobei die Route einen Multicast-Baum umfasst.

10. Verfahren nach Anspruch 9, wobei die Steuerinformationen ferner eine Codierung des Multicast-Baums umfassen.

11. Netzknoten (500), der Folgendes umfasst:
eine Eingangsnetzschnittstelle (510), die konfiguriert ist, eine Datenübertragung zu empfangen, wobei die Datenübertragung Steuerinformationen und einen Nutzdateninhalt enthält;
einen Prozessor (530), der konfiguriert ist, eine Aktion in Reaktion auf das Bestimmen, dass die Steuerinformationen eine Anweisung zum Ausführen der Aktion enthalten, auszuführen;
einen Cache (540); und
eine Ausgangsnetzschnittstelle (512), die konfiguriert ist, den Nutzdateninhalt in Übereinstimmung mit den Steuerinformationen weiterzuleiten,
wobei die Anweisung eine Angabe für den Knoten zum Cache-Speichern des Nutzdateninhalts umfasst; und
wobei der Prozessor (530) konfiguriert ist, den Nutzdateninhalt in dem Cache (540) im Cache zu speichern; wobei die Steuerinformationen ferner einen Befehl, der in einem Befehlsfeld spezifiziert ist, und Metadaten in einem Metadatenfeld umfassen,
wobei die Metadaten Parameter für den Befehl und/oder Daten, die zum Ausführen des Befehls erforderlich sind, spezifizieren; und
der Prozessor (530) konfiguriert ist, die Aktion durch Ausführen des Befehls wie durch die Metadaten spezifiziert auszuführen;
**dadurch gekennzeichnet, dass**
der Befehl eine Anweisung zum Kommunizieren an einen weiteren Knoten, ob ein Inhaltselement in dem Empfangsknoten im Cache gespeichert ist, umfasst, und
die Metadaten den weiteren Knoten und das Inhaltselement identifizieren.

12. Netzknoten nach Anspruch 11, wobei:
der Prozessor (530) ferner konfiguriert ist, die Aktion in Reaktion auf das Bestimmen,
dass die Anweisung für den Netzknoten (500) bestimmt ist, auszuführen.

13. Ursprungsknoten, der Folgendes umfasst:
eine Eingangsnetzschnittstelle;
einen Prozessor, wobei die Eingangsnetzschnittstelle zum Empfangen konfiguriert ist oder der Prozessor konfiguriert ist zum Bestimmen: einer Route durch Knoten eines Netzes beginnend mit dem Ursprungsnetzknoten, und einer spezifizierten Teilmenge der Knoten zum Ausführen einer Aktion; und
eine Ausgangsnetzschnittstelle, die konfiguriert ist, eine Datenübertragung zu senden, die Folgendes umfasst:
einen Nutzdateninhalt, und
Steuerinformationen, die eine Anweisung, die für die Teilmenge der Knoten bestimmt ist, zum Ausführen der Aktion umfassen,
wobei die Anweisung eine Angabe für die Teilmenge der Knoten zum Cache-Speichern des Nutzdateninhalts umfasst;
**dadurch gekennzeichnet, dass**
die Steuerinformationen ferner einen Befehl, der in einem Befehlsfeld spezifiziert ist, Metadaten in einem Metadatenfeld und eine Anweisung, zu einem weiteren Knoten zu kommunizieren, ob ein Inhaltselement in dem Empfangsknoten im Cache gespeichert ist, umfassen, wobei die Metadaten Parameter für den Befehl und/oder Daten, die zum Ausführen des Befehls erforderlich sind, spezifizieren.

## Revendications

1. Procédé au niveau d'un nœud de réception, le procédé comprenant :
la réception (302) d'une transmission de données comprenant des informations de contrôle et une charge utile de contenu ;
la réalisation (306) d'une action en réponse à la détermination que les informations de contrôle comprennent une instruction d'exécution de l'action ; et
le transfert (308) de la charge utile de contenu conformément aux informations de contrôle, l'instruction comprenant une indication au nœud de réception de mettre en cache la charge utile de contenu ; et
la réalisation (306) de l'action comprend la mise en cache de la charge utile de contenu dans un cache au niveau du nœud de réception ;
dans lequel les informations de contrôle comprennent en outre une commande spécifiée dans un champ de commande et des métadonnées dans un champ de métadonnées, les métadonnées spécifiant au moins des paramètres de la commande et/ou des données nécessaires pour réaliser la commande ; et
la réalisation (306) de l'action comprend la réalisation de la commande spécifiée par les métadonnées ;
**caractérisé en ce que**
la commande comprend une instruction de communication à un autre nœud qu'un élément de contenu est mis en cache ou non au niveau du nœud de réception, et
les métadonnées identifient l'autre nœud et l'élément de contenu.

2. Procédé selon la revendication 1, dans lequel :
la réalisation (306) de l'action comprend en outre la détermination d'une étiquette pour la charge utile de contenu à partir des informations de contrôle ; et
la mise en cache de la charge utile de contenu comprend la mise en cache de la charge utile de contenu en vue de sa récupération au moyen de l'étiquette.

3. Procédé selon l'une quelconque des revendications 1 et 2, dans lequel les informations de contrôle comprennent en outre un champ spécifiant un délai d'expiration de la mise en cache, le procédé comprenant en outre :
l'élimination de la charge utile de contenu du cache après le délai d'expiration de la mise en cache.

4. Procédé selon l'une quelconque des revendications 1 à 3, dans lequel :
la commande comprend une instruction de remplacement d'un premier élément de contenu mis en cache au niveau du nœud de réception par un second élément de contenu déchargé à partir d'un emplacement de contenu, et
les métadonnées identifient le premier élément de contenu, le second élément de contenu et l'emplacement de contenu.

5. Procédé selon l'une quelconque des revendications 1 à 4, dans lequel :
la commande comprend une instruction d'exécution d'un script, et
les métadonnées codent le script.

6. Procédé selon l'une quelconque des revendications 1 à 5, dans lequel :
la détermination que les informations de contrôle comportent une instruction d'exécution de l'action comprend la détermination que l'instruction est adressée au nœud de réception.

7. Procédé selon l'une quelconque des revendications 1 à 6, dans lequel les informations de contrôle comprennent au moins une ou plusieurs informations parmi : une adresse de protocole Internet, IP, un identifiant de segment de réseau, ou un port sortant.

8. Procédé au niveau d'un nœud source comprenant :
au moins une détermination et/ou réception (402) :
d'une route passant par des nœuds d'un réseau commençant par le nœud source, et
d'un sous-ensemble spécifié des nœuds pour réaliser une action ; et
la transmission d'une transmission de données comprenant :
une charge utile de contenu, et
des informations de contrôle comprenant une instruction d'exécution de l'action adressée au sous-ensemble des nœuds
dans lequel l'instruction comprend une indication au nœud de réception de mettre en cache la charge utile de contenu ;
**caractérisé en ce que**
les informations de contrôle comprennent en outre une commande spécifiée dans un champ de commande, des métadonnées dans un champ de métadonnées et une instruction pour communiquer à un autre nœud qu'un élément de contenu est mis en cache ou non au niveau du nœud de réception, les métadonnées spécifiant au moins des paramètres de la commande et/ou des données nécessaires pour réaliser la commande.

9. Procédé selon la revendication 8, dans lequel la route comprend un arbre de multidiffusion.

10. Procédé selon la revendication 9, dans lequel les informations de contrôle comprennent en outre un codage de l'arbre de multidiffusion.

11. Nœud de réseau (500) comprenant :
une interface réseau entrante (510) configurée pour recevoir une transmission de données, la transmission de données comprenant des informations de contrôle et une charge utile de contenu ;
un processeur (530) configuré pour réaliser une action en réponse à la détermination que les informations de contrôle comportent une instruction d'exécution de l'action ;
un cache (540) ; et
une interface réseau sortante (512) configurée pour transférer la charge utile de contenu conformément aux informations de contrôle
dans lequel l'instruction comprend une indication au nœud de mettre en cache la charge utile de contenu ; et
le processeur (530) est configuré pour mettre en cache la charge utile de contenu dans le cache (540) ; les informations de contrôle comprenant en outre une commande spécifiée dans un champ de commande et des métadonnées dans un champ de métadonnées, les métadonnées spécifiant au moins des paramètres de la commande et/ou des données nécessaires pour réaliser la commande ; et
le processeur (530) est configuré pour réaliser l'action en réalisant la commande spécifiée par les métadonnées ;
**caractérisé en ce que**
la commande comprend une instruction de communication à un autre nœud qu'un élément de contenu est mis en cache ou non au niveau du nœud de réception, et
les métadonnées identifient l'autre nœud et l'élément de contenu.

12. Nœud de réseau selon la revendication 11, dans lequel :
le processeur (530) est en outre configuré pour réaliser l'action en réponse à la détermination que l'instruction est adressée au nœud de réseau (500).

13. Nœud de réseau source comprenant :
une interface réseau entrante ;
un processeur, l'interface réseau entrante étant configurée pour recevoir ou le processeur étant configuré pour déterminer : une route passant par des nœuds d'un réseau commençant par le nœud de réseau source, et un sous-ensemble spécifié des nœuds pour réaliser une action ; et
une interface réseau sortante configurée pour transmettre une transmission de données comprenant :
une charge utile de contenu, et
des informations de contrôle comprenant une instruction adressée au sous-ensemble des nœuds pour exécuter l'action
dans lequel l'instruction comprend une indication au sous-ensemble des nœuds de mettre en cache la charge utile de contenu ;
**caractérisé en ce que**
les informations de contrôle comprennent en outre une commande spécifiée dans un champ de commande, des métadonnées dans un champ de métadonnées et une instruction de communication à un autre nœud qu'un élément de contenu est mis en cache ou non au niveau du nœud de réception, les métadonnées spécifiant au moins des paramètres pour la commande et/ou des données nécessaires pour réaliser la commande.
